# EUROPEAN PATENT APPLICATION

(11) **EP 4 712 243 A1**
(43) Date of publication of application: **18.03.2026**
(21) Application number: 24929887.8
(22) Date of filing: 12.12.2024
(51) Int. Cl.: H01M 50/333, H01M 50/383, H01M 50/249

(54) **BATTERY PACK**

(30) Priority: 12.03.2024 KR 20240034480
(71) Applicant: LG Energy Solution, Ltd., Seoul 07335 (KR)
(72) Inventor: HAN, Min-Hee, Daejeon 34122 (KR); KIM, Kwang-Mo, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/020276
(87) International publication number: WO 2025/192828

(57) **Abstract**

Disclosed is a battery pack. The battery pack includes a base plate; a first battery module installed on an upper surface of the base plate; and a partition wall including a fixed wall installed on the upper surface of the base plate and having an opening facing the first battery module and a moving wall covering the opening and installed movably.

## Description

### TECHNICAL FIELD

The present disclosure relates to a battery pack.

The present application claims priority to Korean Patent Application No. 10-2024-0034480 filed on March 12, 2024 in the Republic of Korea, the disclosure of which is incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery cell or module is not properly controlled and a chain reaction occurs, it may cause not only great property damage but also human casualties. Therefore, it is necessary to properly control thermal events occurring in battery cells or modules to improve the thermal stability of the battery pack.

### DISCLOSURE

### Technical Problem

The present disclosure is designed to solve these and other problems.

The present disclosure is directed to providing a battery pack with improved safety when a thermal event occurs.

The present disclosure is also directed to providing a battery pack that may suppress heat propagation by expanding a venting space around a battery module when a thermal event occurs.

The present disclosure is also directed to providing a battery pack that may delay the accumulation of thermal energy by expanding the venting space around the battery module when a thermal event occurs.

### Technical Solution

In one aspect of the present disclosure, there is provided a battery pack comprising: a base plate; a first battery module installed on an upper surface of the base plate; and a partition wall including a fixed wall installed on the upper surface of the base plate and having an opening facing the first battery module and a moving wall covering the opening and installed movably.

In addition, the moving wall may be movable toward or away from the first battery module.

In addition, the moving wall may move away from the first battery module when a thermal event occurs from the first battery module.

In addition, the first battery module may include a module case providing an inner space; and
a plurality of battery cells accommodated inside the module case.

In addition, the battery pack may further comprise a second battery module installed on the upper surface of the base plate, and the partition wall may be located between the first battery module and the second battery module.

In addition, the battery pack may further comprise a first stopper protruding into the opening; and a second stopper protruding into the opening and spaced apart from the first stopper in a thickness direction of the fixed wall, and the moving wall may be located between the first stopper and the second stopper.

In addition, the first stopper may extend along a periphery of the opening.

In addition, the partition wall may further include a first elastic member that is located between the first stopper and the moving wall and provides a restoring force to the moving wall.

In addition, the partition wall may further include a second elastic member that is located between the second stopper and the moving wall and provides a restoring force to the moving wall.

In addition, an elastic modulus of the first elastic member and an elastic modulus of the second elastic member may be configured to be substantially the same.

In addition, the partition wall may further include an adhesive member that couples the moving wall to the opening.

In addition, the moving wall may be configured to have lower thermal conductivity than the fixed wall.

In addition, the moving wall may include a first sheet; and a second sheet coupled to the first sheet and made of a different material from the first sheet.

In addition, the first sheet may contain a mica material.

In addition, the second sheet may contain a silicone or aerogel material.

In another aspect of the present disclosure, there is also provided a vehicle, comprising the battery pack according to the present disclosure.

### Advantageous Effects

According to at least one of the embodiments of the present disclosure, it is possible to improve thermal stability of a battery pack.

According to at least one of the embodiments of the present disclosure, heat propagation may be suppressed.

According to at least one of the embodiments of the present disclosure, when a thermal event occurs, the accumulation of thermal energy may be delayed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing the battery pack of FIG. 1, in which some components are exploded.
FIG. 3 is a diagram showing a battery module of FIG. 2, in which some components are exploded.
FIG. 4 is a drawing showing some components of the battery pack of FIG. 1.
FIG. 5 is a cross-sectional view taken along the cutting line A-A' or the cutting line B-B' of FIG. 1.
FIGS. 6 and 7 are drawings showing that a thermal event has occurred in FIG. 5.
FIG. 8 is a cross-sectional view taken along the cutting line C-C' of FIG. 1.
FIG. 9 is a drawing showing a modified embodiment of FIG. 5.
FIG. 10 is a drawing showing that a thermal event has occurred in FIG. 9.
FIG. 11 is a drawing showing a moving wall of FIG. 2.
FIG. 12 is a diagram showing the moving wall of FIG. 11, in which some components are exploded.
FIG. 13 is a cross-sectional view taken along the cutting line D-D' of FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

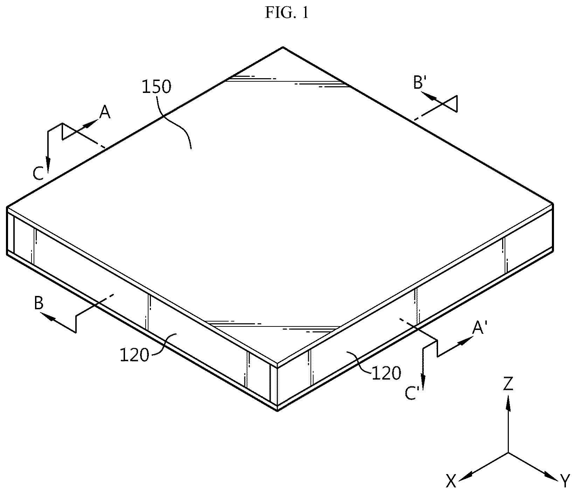

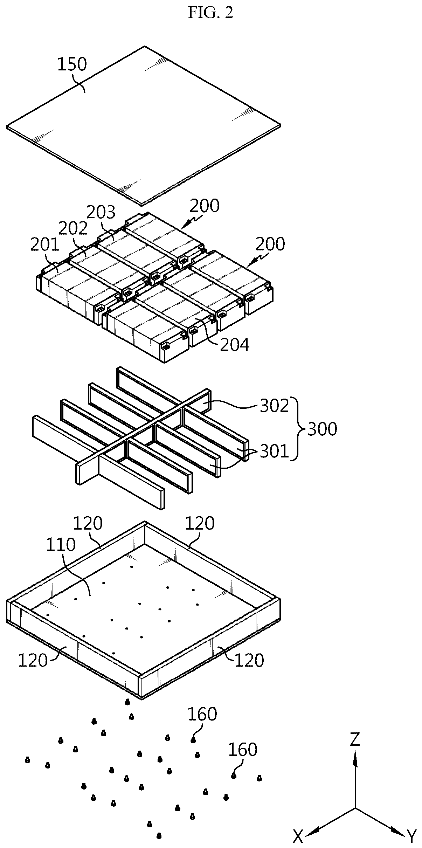

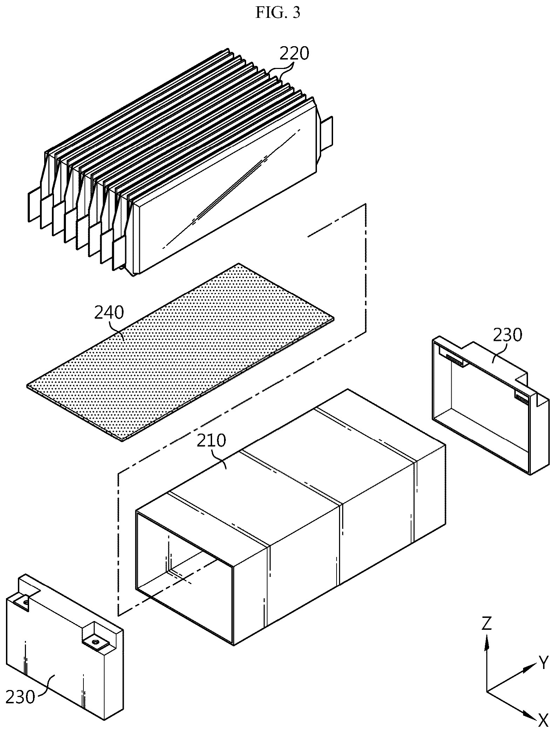

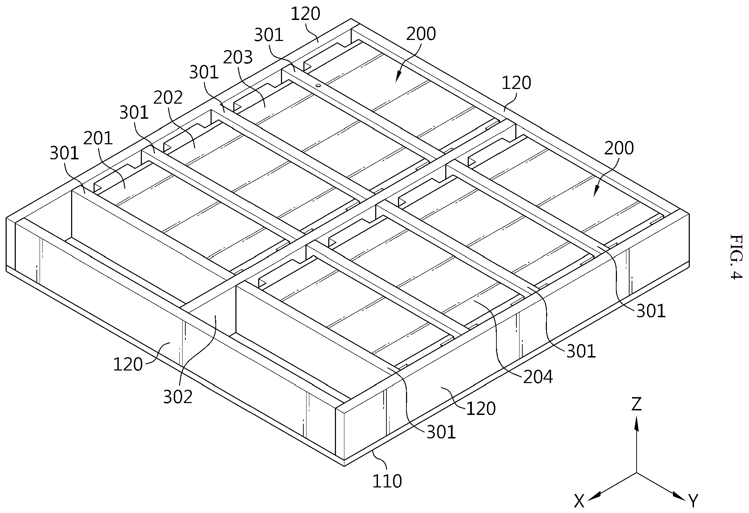

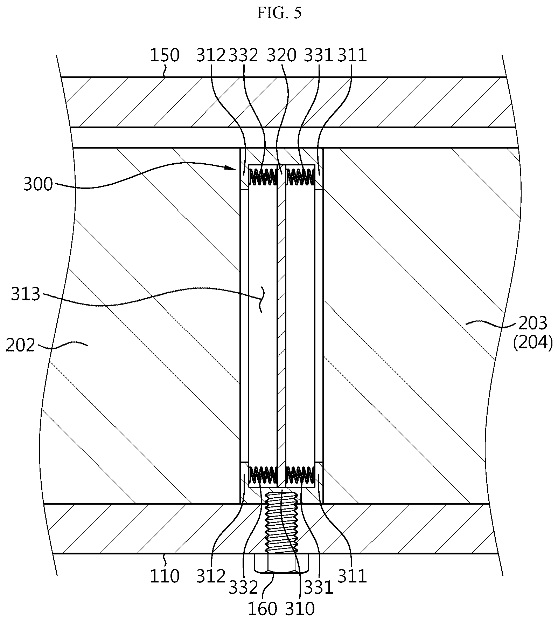

FIG. 1 is a diagram showing a battery pack according to an embodiment of the present disclosure. FIG. 2 is a diagram showing the battery pack of FIG. 1, in which some components are exploded. FIG. 3 is a diagram showing a battery module 200, 201, 202, 203, 204 of FIG. 2, in which some components are exploded. FIG. 4 is a drawing showing some components of the battery pack of FIG. 1. FIG. 5 is a cross-sectional view taken along the cutting line A-A' or the cutting line B-B' of FIG. 1.

Referring to FIGS. 1 to 5, the battery pack according to an embodiment of the present disclosure may include a base plate 110, a battery module 200, 201, 202, 203, 204, and a partition wall 300.

The base plate 110 may have a rectangular shape. The base plate 110 may have a flat plate shape. The base plate 110 may form the outer appearance of the battery pack. The base plate 110 may provide an inner space of the battery pack.

The battery module 200, 201, 202, 203, 204 may be provided in plurality. The battery module 200, 201, 202, 203, 204 may be installed, fastened, coupled, fixed, or attached to the upper surface of the base plate 110.

The partition wall 300 may include a first partition wall 301 and a second partition wall 302. The partition wall 300 may be provided in plurality. The partition wall 300 may be installed, fastened, fixed, coupled, or attached to the upper surface of the base plate 110. The partition wall 300 may partition the inner space of the battery pack. The battery modules 200, 201, 202, 203, and 204 may be positioned in the spaces partitioned by the partition wall 300, respectively.

The partition wall 300 may include a fixed wall 310 and a moving wall 320. The fixed wall 310 may be installed, fastened, fixed, coupled, or attached to the upper surface of the plate. In addition, the fixed wall 310 may have an opening 313. The opening 313 may have a rectangular shape. The opening 313 may extend along the longitudinal direction of the partition wall 300.

The moving wall 320 may cover the opening 313. Also, the moving wall 320 may be installed or coupled to the opening 313. The moving wall 320 may be installed in a movable manner.

Also, the partition wall 300, the fixed wall 310, the opening 313, or the moving wall 320 may face at least one side of the battery module 200, 201, 202, 203, 204.

According to this configuration of the present disclosure, the thermal safety of the battery pack may be improved. When a thermal event occurs, the venting gas g may be discharged from the battery modules 200, 201, 202, 203, 204. At this time, the space surrounding the battery modules 200, 201, 202, 203, 204 may be expanded as the moving wall 320 moves. As a result, the venting space may be secured, and the heat energy accumulation speed of the space around the battery modules 200, 201, 202, 203, 204 may be delayed. In addition, heat propagation inside the battery pack may be delayed or suppressed.

Referring to FIGS. 1 to 5, the battery pack according to an embodiment of the present disclosure may include a first partition wall 301, a second partition wall 302, a side wall 120, and a pack cover 150.

The side wall 120 may be installed, fastened, coupled, fixed, or attached to the upper surface of the base plate 110. The side wall 120 may be composed of four pieces. The side wall 120 may be arranged along the periphery of the base plate 110. The side wall 120 may form the outer appearance of the battery pack. The side wall 120 may provide an inner space.

The second partition wall 302 may be extended in the front and rear direction. The second partition wall 302 may partition the inner space into a left space and a right space. The first partition wall 301 may be extended in the left and right direction. Four first partition walls 301 may be positioned in the left space and four first partition walls 301 may be positioned in the right space. The plurality of first partition walls 301 may be arranged in the front and rear direction.

The battery modules 200, 201, 202, 203, 204 may be surrounded by the side wall 120, the first partition wall 301, and the second partition wall 302.

The pack cover 150 may have a rectangular plate shape. The pack cover 150 may have a flat plate shape. The pack cover 150 may form the outer appearance of the battery pack. The pack cover 150 may cover the inner space of the battery pack. The pack cover 150 may be installed, fastened, coupled, fixed, or attached to the side wall 120. In addition, the pack cover 150 may cover the upper surface of the battery modules 200, 201, 202, 203, 204.

Referring to FIGS. 1 to 5, the battery module 200, 201, 202, 203, 204 may be provided in plurality. Each battery module 200, 201, 202, 203, 204 may include a module case 210, a battery cell 220, an end cover 230, and a heat transfer member 240. The module case 210 may have a rectangular parallelepiped shape. The module case 210 may have a shape in which the left surface and the right surface are opened. The module case 210 may form the outer appearance of the battery module 200, 201, 202, 203, 204. The module case 210 may provide a space therein.

The battery cell 220 may be accommodated inside the module case 210. The battery cell 220 may be provided in plurality. At this time, the battery cell 220 may mean a secondary battery. In addition, the battery cell 220 may have a pouch shape. The plurality of battery cells 220 may be stacked or arranged in the front and rear direction.

The heat transfer member 240 may be positioned between the plurality of battery cells 220 and the module case 210. The heat transfer member 240 may be positioned below the plurality of battery cells 220. The heat transfer member 240 may be made of a resin. In addition, the heat transfer member 240 may fix the plurality of battery cells 220 to the module case 210. In addition, the heat transfer member 240 may transfer heat generated from the plurality of battery cells 220 to the module case 210.

The end cover 230 may be provided as a pair. The pair of end covers 230 may be coupled, fastened, fixed, or attached to the left surface and the right surface of the module case 210, respectively. The end cover 230 may form the outer appearance of the battery module 200, 201, 202, 203, 204.

Referring to FIGS. 1 to 5, the battery pack according to an embodiment of the present disclosure may include a fastening member 160. The fastening member 160 may penetrate the base plate 110. Also, the fastening member 160 may be inserted into the fixed wall 310 of the partition wall 300. The fastening member 160 may install, fasten, couple, fix, or attach the partition wall 300 and the base plate 110.

According to this configuration of the present disclosure, the fixed wall 310 of the partition wall 300 may be stably fixed.

Referring to FIGS. 1 to 5, the partition wall 300 of the battery pack according to an embodiment of the present disclosure may be positioned between two neighboring battery modules 200, 201, 202, 203, 204. For example, the first partition wall 301 may be positioned between the second battery module 202 and the third battery module 203. The moving wall 320 may be movable between the second battery module 202 and the third battery module 203.

Also, the second partition wall 302 may be positioned between the second battery module 202 and the fourth battery module 204. The moving wall 320 may move between the second battery module 202 and the fourth battery module 204.

According to this configuration of the present disclosure, the thermal safety of the battery pack may be improved. The partition wall 300 may expand the venting space between neighboring battery modules 200, 201, 202, 203, 204.

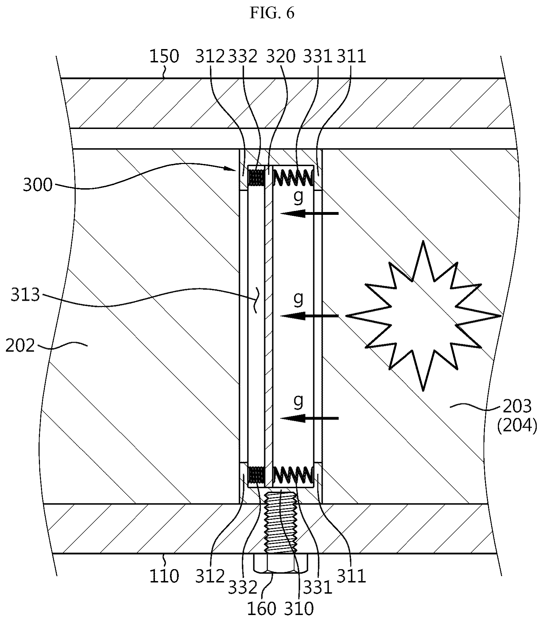

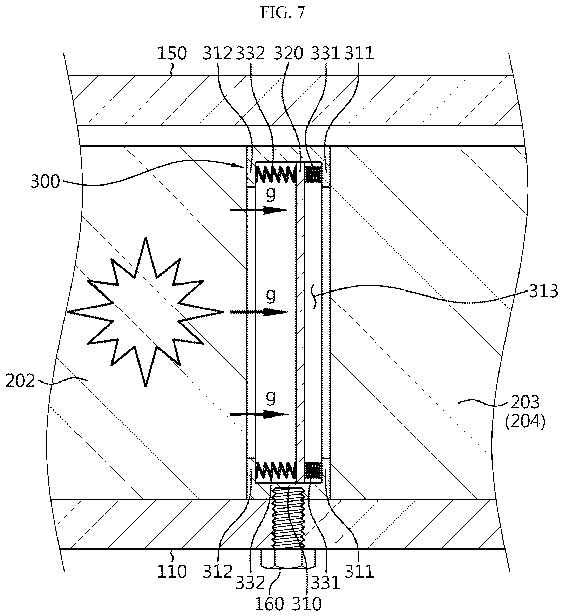

FIGS. 6 and 7 are drawings showing that a thermal event has occurred in FIG. 5. Referring to FIGS. 5 to 7, the moving wall 320 of the battery pack according to an embodiment of the present disclosure may be configured to move toward or away from the second battery module 202.

For example, the moving wall 320 of the first partition wall 301 may expand the venting space of the second battery module 202 by moving toward the third battery module 203. Alternatively, the moving wall 320 of the first partition wall 301 may expand the venting space of the third battery module 203 by moving toward the second battery module 202.

Also, the moving wall 320 of the second partition wall 302 may expand the venting space of the second battery module 202 by moving toward the fourth battery module 204. Alternatively, the moving wall 320 of the second partition wall 302 may expand the venting space of the fourth battery module 204 by moving toward the second battery module 202.

According to this configuration of the present disclosure, the thermal safety of the battery pack may be improved. The partition wall 300 may expand the venting space between neighboring battery modules 200, 201, 202, 203, 204.

Referring to FIGS. 5 to 7, when a thermal event occurs, the moving wall 320 of the battery pack according to an embodiment of the present disclosure may move away from the battery module 200, 201, 202, 203, 204 where a thermal event occurs.

For example, when a thermal event occurs from the second battery module 202, the moving wall 320 of the first partition wall 301 may expand the venting space of the second battery module 202 by moving toward the third battery module 203. Alternatively, when a thermal event occurs from the third battery module 203, the moving wall 320 of the first partition wall 301 may expand the venting space of the third battery module 203 by moving toward the second battery module 202.

In addition, when a thermal event occurs from the second battery module 202, the moving wall 320 of the second partition wall 302 may expand the venting space of the second battery module 202 by moving toward the fourth battery module 204. Alternatively, when a thermal event occurs from the fourth battery module 204, the moving wall 320 of the second partition wall 302 may expand the venting space of the fourth battery module 204 by moving toward the second battery module 202.

According to this configuration of the present disclosure, the thermal safety of the battery pack may be improved. The partition wall 300 may expand the venting space between neighboring battery modules 200, 201, 202, 203, 204.

Referring to FIGS. 5 to 7, the partition wall 300 of the battery pack according to an embodiment of the present disclosure may include a first stopper 311 and a second stopper 312. The first stopper 311 may protrude into the opening 313. The second stopper 312 may protrude into the opening 313. The first stopper 311 and the second stopper 312 may be spaced apart in the thickness direction of the fixed wall 310. Also, the first stopper 311 and the second stopper 312 may be positioned to face each other.

The moving wall 320 may be positioned between the first stopper 311 and the second stopper 312. The moving wall 320 may move between the first stopper 311 and the second stopper 312. The first stopper 311 and the second stopper 312 may limit the range of movement of the moving wall 320. In addition, the first stopper 311 and the second stopper 312 may limit the range of movement of the moving wall 320 so that the moving wall 320 does not deviate from the opening 313.

According to this configuration of the present disclosure, the moving wall 320 may maintain a state of being stably installed in the opening 313 while expanding the venting space.

Referring to FIGS. 5 to 7, the first stopper 311 of the battery pack according to an embodiment of the present disclosure may extend along the periphery of the opening 313. The first stopper 311 may have a rectangular shape. Also, the second stopper 312 may extend along the periphery of the opening 313. The second stopper 312 may have a rectangular shape.

According to this configuration of the present disclosure, the first stopper 311 and the second stopper 312 may stably maintain the installation state of the moving wall 320.

Referring to FIGS. 5 to 7, the battery pack according to an embodiment of the present disclosure may include a first elastic member 331. The first elastic member 331 may be positioned between the first stopper 311 and the moving wall 320. The first elastic member 331 may provide a restoring force to the moving wall 320. One end of the first elastic member 331 may be coupled, fixed, attached, or fastened to the moving wall 320. The other end of the first elastic member 331 may be coupled, fixed, attached, or fastened to the first stopper 311. For example, the first elastic member 331 may be a spring. The first elastic member 331 may be provided in plurality, and the plurality of first elastic members may be arranged along the periphery of the first stopper 311.

According to this configuration of the present disclosure, the thermal safety of the battery pack may be improved. The moving wall 320 may stably expand the venting space by the first elastic member 331.

Referring to FIGS. 5 to 7, may battery pack according to an embodiment of the present disclosure may include a second elastic member 332. The second elastic member 332 may be positioned between the second stopper 312 and the moving wall 320. The second elastic member 332 may provide a restoring force to the moving wall 320. One end of the second elastic member 332 may be coupled, fixed, attached, or fastened to the moving wall 320. The other end of the second elastic member 332 may be coupled, fixed, attached, or fastened to the second stopper 312. For example, the second elastic member 332 may be a spring. The second elastic member 332 may be provided in plurality, and the plurality of second elastic members may be arranged along the periphery of the second stopper 312.

According to this configuration of the present disclosure, the thermal safety of the battery pack may be improved. The moving wall 320 may stably expand the venting space by the second elastic member 332.

Referring to FIGS. 5 to 7, the elastic modulus of the first elastic member 331 and the elastic modulus of the second elastic member 332 of the battery pack according to an embodiment of the present disclosure may be configured to be substantially the same.

According to this configuration of the present disclosure, the moving wall 320 may be supported while maintaining a stable equilibrium state.

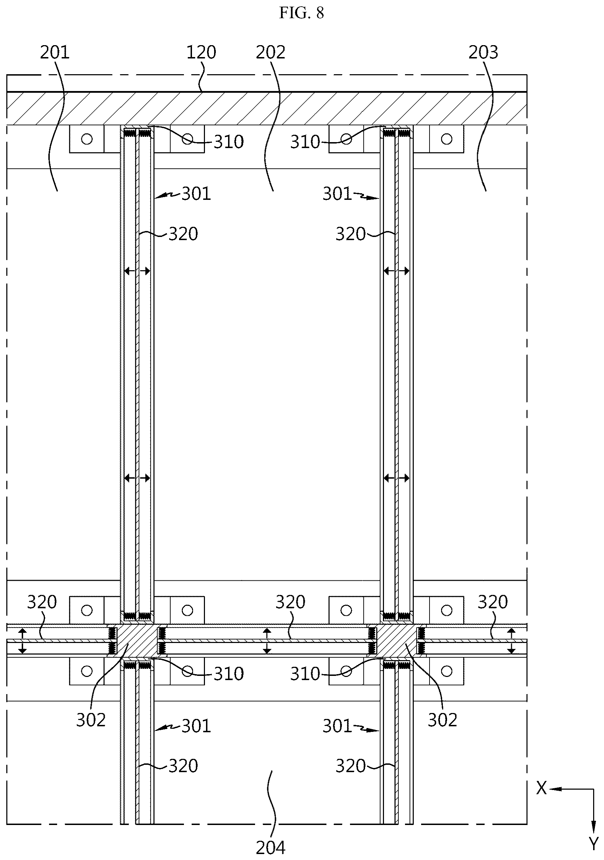

FIG. 8 is a cross-sectional view taken along the cutting line C-C' of FIG. 1. Referring to FIG. 8, each of the plurality of first partition wall 301 and the second partition wall 302 may include a moving wall 320. For example, when a thermal event occurs from the second battery module 202, the moving wall 320 between the second battery module 202 and the third battery module 203 may expand the venting space. Also, the moving wall 320 between the second battery module 202 and the first battery module 201 may expand the venting space. Also, the moving wall 320 between the second battery module 202 and the fourth battery module 204 may expand the venting space.

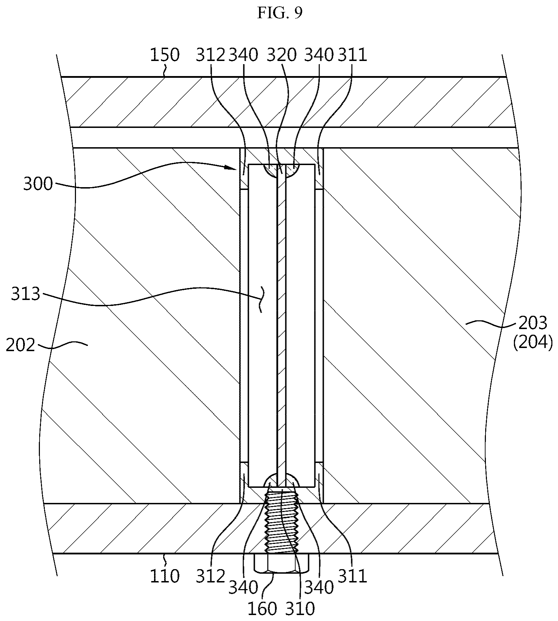

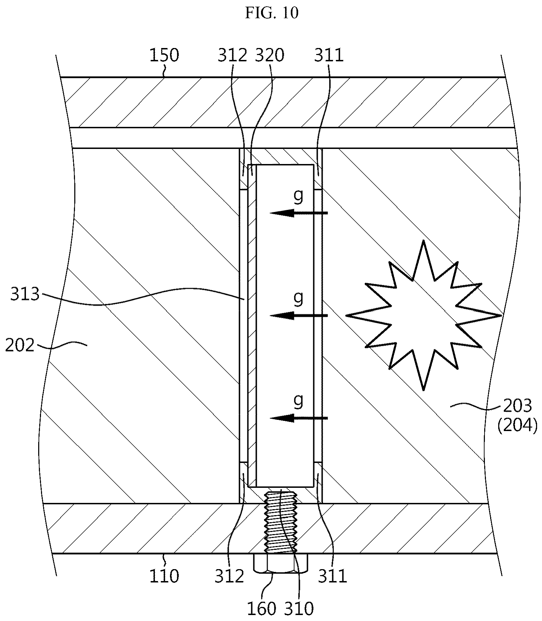

FIG. 9 is a drawing showing a modified embodiment of FIG. 5. FIG. 10 is a drawing showing that a thermal event has occurred in FIG. 9.

Referring to FIGS. 8 to 10, the partition wall 300 of the battery pack according to another embodiment of the present disclosure may further include an adhesive member 340 that couples, fixes, or attaches the moving wall 320 to the opening 313. The adhesive member 340 may be arranged along the periphery of the moving wall 320. Also, the adhesive member 340 may contain a material that melts at a relatively low temperature. When a thermal event occurs in the battery module 200, 201, 202, 203, 204, the adhesive member 340 may be easily melted by the venting gas g. As a result, the moving wall 320 may be separated from the opening 313. For example, the separated moving wall 320 may move away from the third battery module 203 or the fourth battery module 204.

According to this configuration of the present disclosure, the thermal safety of the battery pack may be improved. The moving wall 320 may be stably installed and fixed to the opening 313 by the adhesive member 340, and may expand the venting space when a thermal event occurs.

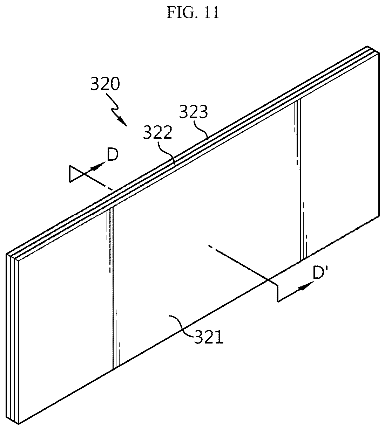

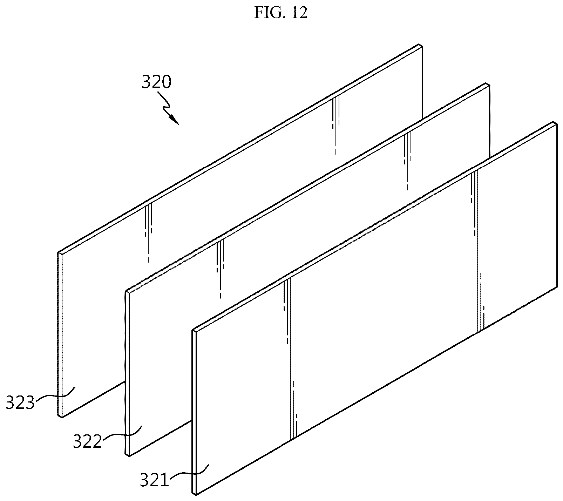

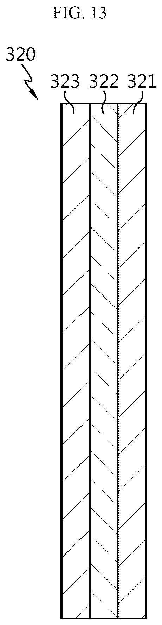

FIG. 11 is a drawing showing a moving wall 320 of FIG. 2. FIG. 12 is a diagram showing the moving wall 320 of FIG. 11, in which some components are exploded. FIG. 13 is a cross-sectional view taken along the cutting line D-D' of FIG. 11.

Referring to FIGS. 11 to 13, the moving wall 320 of the battery pack according to an embodiment of the present disclosure may include a plurality of sheets.

The moving wall 320 may be configured to have lower thermal conductivity than the fixed wall 310. The moving wall 320 may include a first sheet 321, a second sheet 322, and a third sheet 323. The second sheet 322 may be positioned between the first sheet 321 and the third sheet 323. One surface of the second sheet 322 may be coupled to the first sheet 321. Also, the third sheet 323 may be coupled to the other surface of the second sheet 322. In addition, the first sheet 321 and the second sheet 322 may contain different materials. Also, the second sheet 322 and the third sheet 323 may contain different materials.

According to this configuration of the present disclosure, the thermal safety of the battery pack may be improved. Since the moving wall 320 may be made of composite materials to stably block heat propagation while expanding the venting space.

Referring to FIGS. 11 to 13, the first sheet 321 or the third sheet 323 of the battery pack according to an embodiment of the present disclosure may contain a material having high fire resistance or heat resistance. For example, the first sheet 321 or the third sheet 323 may contain a mica material. In this case, the mica material may be a material having high hardness. In addition, the first sheet 321 or the third sheet 323 may contain a steel material.

According to this configuration of the present disclosure, the thermal safety of the battery pack may be improved. Since the first sheet 321 or the third sheet 323 of the moving wall 320 has high fire resistance or heat resistance, the moving wall 320 may maintain a stable coupled state to the opening 313 while expanding the venting space.

Referring to FIGS. 11 to 13, the second sheet 322 of the battery pack according to an embodiment of the present disclosure may contain a material having high insulating properties. For example, the second sheet 322 may contain a silicone or aerogel material.

According to this configuration of the present disclosure, the thermal safety of the battery pack may be improved. Since the second sheet 322 of the moving wall 320 has high insulation properties, the moving wall 320 may stably block heat propagation while expanding the venting space.

In addition, when the battery pack according to the present disclosure may further include various components, for example components of the battery pack known at the time of filing of this application, such as a BMS, a bus bar, a relay, a current sensor, etc.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a base plate;
a first battery module installed on an upper surface of the base plate; and
a partition wall including a fixed wall installed on the upper surface of the base plate and having an opening facing the first battery module and a moving wall covering the opening and installed movably.

2. The battery pack according to claim 1,
wherein the moving wall is movable toward or away from the first battery module.

3. The battery pack according to claim 2,
wherein the moving wall moves away from the first battery module when a thermal event occurs from the first battery module.

4. The battery pack according to claim 1,
wherein the first battery module includes:
a module case providing an inner space; and
a plurality of battery cells accommodated inside the module case.

5. The battery pack according to claim 1, further comprising:
a second battery module installed on the upper surface of the base plate,
wherein the partition wall is located between the first battery module and the second battery module.

6. The battery pack according to claim 1,
wherein the partition wall further includes:
a first stopper protruding into the opening; and
a second stopper protruding into the opening and spaced apart from the first stopper in a thickness direction of the fixed wall,
wherein the moving wall is located between the first stopper and the second stopper.

7. The battery pack according to claim 6,
wherein the first stopper extends along a periphery of the opening.

8. The battery pack according to claim 6,
wherein the partition wall further includes a first elastic member that is located between the first stopper and the moving wall and provides a restoring force to the moving wall.

9. The battery pack according to claim 8,
wherein the partition wall further includes a second elastic member that is located between the second stopper and the moving wall and provides a restoring force to the moving wall.

10. The battery pack according to claim 9,
wherein an elastic modulus of the first elastic member and an elastic modulus of the second elastic member are configured to be substantially the same.

11. The battery pack according to claim 1,
wherein the partition wall further includes an adhesive member that couples the moving wall to the opening.

12. The battery pack according to claim 1,
wherein the moving wall is configured to have lower thermal conductivity than the fixed wall.

13. The battery pack according to claim 1,
wherein the moving wall includes:
a first sheet; and
a second sheet coupled to the first sheet and made of a different material from the first sheet.

14. The battery pack according to claim 13,
wherein the first sheet contains a mica material.

15. The battery pack according to claim 13,
wherein the second sheet contains a silicone or aerogel material.

16. A vehicle comprising the battery pack according to any one of claims 1 to 15.
